# EUROPÄISCHE PATENTANMELDUNG

(11) **EP 2 284 638 A2**
(43) Veröffentlichungstag der Anmeldung: **16.02.2011**
(21) Anmeldenummer: 10007299.0
(22) Anmeldetag: 15.07.2010
(51) Int. Cl.: G05F 1/613

(54) **Netzteil-Schaltungsanordnung und Verfahren zum Betreiben einer Netzteil-Schaltungsanordnung**

(30) Priorität: 16.07.2009 DE 102009033385
(71) Anmelder: Diehl AKO Stiftung & Co. KG, 88239 Wangen (DE)
(72) Erfinder: Grundl, Peter, 91056 Erlangen (DE); Otto, Michael, 90530 Wendelstein (DE); Arnold, Georg, 91126 Schwabach (DE)
(74) Vertreter: Diehl Patentabteilung

(57) **Zusammenfassung**

Eine Netzteil-Schaltungsanordnung umfasst eine Konstantstromquelle (C1, B1, C2, D1, Z1), eine Steuervorrichtung (ST) und einen an einer Betriebsspannung (UB) der Konstantstromquelle anliegenden Verbraucher (RL). Dabei weist die Konstantstromquelle eine Spannungsstabilisierungsvorrichtung (Z1) zum Bestimmen der Betriebsspannung (UB) auf. Weiter ist der Spannungsstabilisierungsvorrichtung (Z1) ein Schaltelement (S1) zum Reduzieren des Spannungsabfalls über der Spannungsstabilisierungsvorrichtung zugeordnet und ist die Steuervorrichtung (ST) ausgebildet, um das Schaltelement (S1) zum wahlweisen Reduzieren eines Spannungsabfalls über der Spannungsstabilisierungsvorrichtung (Z1) anzusteuern, wenn der Verbraucher (RL) abgeschaltet ist. Diese Netzteil-Schaltungsanordnung zeichnet sich durch eine geringe Verlustleistung bei abgeschaltetem Verbraucher (RL) aus.

## Beschreibung

### NETZTEIL-SCHALTUNGSANORDNUNG UND VERFAHREN ZUM BETREIBEN EINER NETZTEIL-SCHALTUNGSANORDNUNG

Die vorliegende Erfindung betrifft eine Netzteil-Schaltungsanordnung mit einer Konstantstromquelle und ein Verfahren zum Betreiben einer solchen.

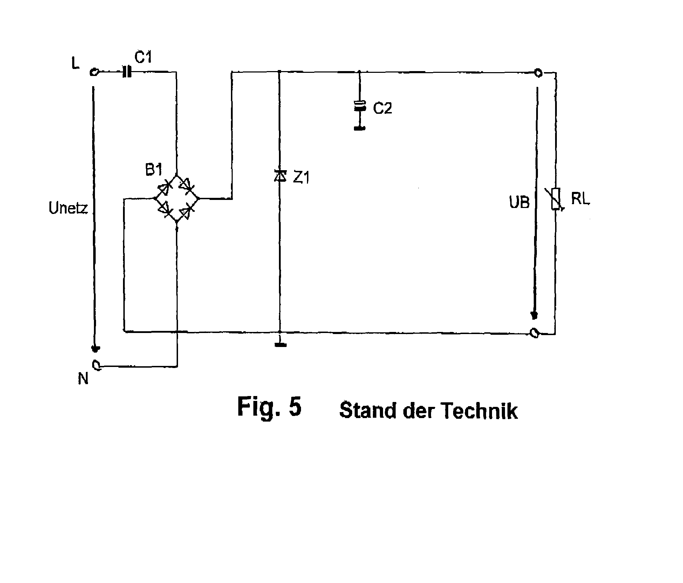

Fig. 5 zeigt den Grundaufbau einer herkömmlichen Netzteil-Schaltungsanordnung mit einer Konstantstromquelle in Form eines Kondensatometzteits. Diese Grundschaltung ist zum Beispiel die Basis für Netzteil-Schaltungsanordnungen, wie sie in der EP 1 154 344 A1 der Anmelderin offenbart sind.

Das Kondensatornetzteil dieser herkömmlichen Schaltungsanordnung weist einen Ladekondensator C1, eine Gleichrichterschaltung beispielsweise in Form eines Brückengleichrichters B1, einen Speicherkondensator C2 und eine Spannungsstabilisierungsvorrichtung In Form einer Zenerdiode Z1 auf. Das Kondensatornetzteil ist mit zwei Anschlüssen L und N an eine Netzspannung Unetz angeschlossen, der Ausgang des Brückengleichrichters B1 ist geerdet. Der Speicherkondensator C2 dient der Glättung des zeitlichen Verlaufs der an den Ausgängen der Gleichrichterschaltung B1 anliegenden Betriebsspannung UB, die Spannungsstabilisierungsvorrichtung Z1 begrenzt diese Spannung nach oben, um an das Kondensatornetzteil angeschlossene Verbraucher RL vor überspannung zu schützen.

Der von diesem Kondensatomeizieil eingeprägte Strom wird im Wesentllichen durch die Frequenz der angelegten Netzspannung Unetz und die Kapazität des Ladekondensators C1 bestimmt. Dieser Strom fließt durch die Gleichrichterschaltung B1 und teilt sich auf in einen Stromantell, der durch den Verbraucher RL fließt, und einen Stromanteil, der durch die Zenerdiode Z1 fließt. Nimmt nun der Strom durch den Verbraucher RL ab, so erhöht sich der durch die Zenerdiode Z1 fließende Strom um genau diesen Betrag.

Dies bedeutet, dass der Leistungsverbrauch der Schaltungsanordnung unabhängig davon, wie viel Strom tatsächlich durch den Verbraucher RL aufgenommen wird, konstant ist. Ein Abschalten des Verbrauchers RL, wenn dieser nicht benötigt wird, zum Zwecke des Einsparens von Verlustleistung ist somit sinnlos, da in diesem Fall die gesamte Leistung an der Zenerdiode Z1 verbraucht wird.

Es besteht daher Bedarf an einer Netzteil-Schaltungsanordnung mit reduzierter Verlustleistung für den Fall, dass der Verbraucher gerade nicht benötigt wird.

In der DE 100 23 347 A1 bzw. der EP 1 154 344 A1 wird für den Fall, dass die Funktion des angeschlossenen Verbrauchers nicht benötigt wird, vorgeschlagen, die Betriebsspannung UB über dem Verbraucher RL wie bei eingeschaltetem Verbraucher mit einem geeigneten Takiverhältnis zwischen kurzgeschlossenem und nicht kurzgeschlossenem Verbraucher RL auf einen zeitlichen Mittelwert zu verringern, sodass der von dem Kondensatornetzteil konstant gelieferte Strom über eine verhältnismäßig kleine Spannungsdifferenz abfließt und so vom Kondensatornetzteil auch nur eine verhältnismäßig geringe elektrische Leistung verbraucht wird.

Die DE 100 02 650 C2 zeigt eine Netzteil-Schaltungsanordnung, die sowohl eine positive als auch eine negative Betriebsspannung bereitstellt. Zum Begrenzen des Stromflusses über die Zenerdiode Z1 und der damit verbundenen Entstehung von Wärme wird der Ladekondensator ausgangsseitig über einen Triac gegen Masse kurzgeschlossen, wenn bei positiver Halbwelle ein vorgegebener Spannungsschwellwert überschritten oder bei negativer Halbwelle ein vorgegebener Spannungsschweilwert unterschritten wird. Insbesondere bei höheren Niederspannungen sowie bei großen und häufigen Lastwechseln können auf diese Weise die Wirkleistung der Zenerdiode Z1 und damit die Verlustleistung der Schaltungsanordnung reduziert werden.

Weiter beschreibt die DE 100 01 711 A1 eine Netzteil-Schaltungsanordnung, bei welcher die Zenerdiode entfällt und stattdessen ein Bypass mit einem Schalter vorgesehen ist. Über diesen Bypass sollen die die Spannungsstabilisierung störenden Stromanteile der Stromhalbwellen abgeleitet werden, wobei in dem Bypass nur eine geringe Verlustleistung entsteht.

Die vorgenannten Druckschriften offenbaren jeweils eine Netzteil-Schaltungsanordnung, bei welcher die Verlustleistungen während des Betriebs des Verbrauchers reduziert werden können.

Der Erfindung liegt die Aufgabe zugrunde, eine verbesserte Netzteil-Schaltungsanordnung mit einer Konstantstromquelle sowie ein verbessertes Verfahren zum Betreiben einer solchen Netzteil-Schaltungsanordnung zu schaffen, mit welchen eine Verlustleistung im Fall eines nicht benötigten Verbrauchers reduziert werden kann.

Gemäß einem ersten Aspekt wird diese Aufgabe gelöst durch eine Netzteil-Schaltungsanordnung mit den Merkmalen des Anspruchs 1. Vorteilhafte Ausgestaltungen und Weiterbildungen der Erfindung sind Gegenstand der abhängigen Ansprüche 2 bis 14.

Die Netzteil-Schaltungsanordnung umfasst eine Konstantstromquelle, eine Steuervorrichtung und einen an einer Betriebsspannung der Konstantstromquelle anliegenden Verbraucher, wobei die Konstantstromquelle eine Spannungsstabilisierungsvorrichtung zum Bestimmen der Betriebsspannung aufweist. Außerdem ist der Spannungsstabilisierungsvorrichtung ein Schaltelement parallel geschaltet, um die Spannungsstabilisierungsvorrichtung zum Reduzieren des Spannungsabfalls über dieser Spannungsstabilisierungsvorrichtung wahlweise zu überbrücken, und ist die Steuervorrichtung derart ausgebildet, dass sie das Schaltelement zum ÜberbrÜcken der Spannungsstabilisierungsvorrichtung ansteuern kann, wenn der Verbraucher abgeschaltet ist und ein Strom durch die Spannungsstabilisierungsvorrichtung einen vorbestimmten Schwellenwert übersteigt, und um das Schaltelement zum Aufheben der Überbrückung der Spannungsstabilisierungsvorrichtung anzusteuern, wenn die Betriebsspannung bei abgeschaltetem Verbraucher einen vorbestimmten Schwellenwert unterschreitet.

Bei dieser Netzteil-Schaltungsanordnung kann der Verbraucher, wenn seine Funktion nicht benötigt wird, abgeschaltet werden. Wird der Verbraucher in einem solchen Fall abgeschaltet, so kann die Steuervorrichtung den Spannungsabfall über der Spannungsstabilisierungsvorrichtung mit Hilfe des dieser Spannungsstabilisierungsvorrichtung zugeordneten Schaltelements reduzieren. Auf diese Weise reduziert sich die Verlustleistung der Spannungsstabilisierungsvorrichtung im Fall eines abgeschalteten Verbrauchers zumindest zeitweise und damit auch insgesamt.

Die Netzteil-Schaltungsanordnung mit der Möglichkeit einer verringerten Verlustleistung bei abgeschaltetem Verbraucher zeichnet sich ferner durch ihren einfachen Schaltungsaufbau mit nur wenig zusätzlichen Bauteilen aus.

Außerdem kann die Spannungsstabilisierungsvorrichtung einfacher und kostengünstiger als ohne die erfindungsgemäße Maßnahme zum wahlweisen Reduzieren des Spannungsabfalls Ober ihr gewählt werden, da durch sie selbst bei abgeschaltetem Verbraucher nie der effektive Wert des gesamten eingeprägten Stroms fließt.

Gemäß der Erfindung ist das Schaltelement parallel zur Spannungsstabilisierungsvorrichtung angeordnet, sodass es die Spannungsstabilisierungsvorrichtung wahlweise überbrücken kann. Hierdurch kann der Spannungsabfall über der Spannungsstabilisierungsvorrichtung auf Null abgesenkt werden, wenn der Verbraucher abgeschaltet ist.

Außerdem ist die Steuervorrichtung so ausgebildet, dass sie das Schaltelement zum Überbrücken der Spannungsstabilisierungsvorrichtung ansteuert, wenn ein Strom durch die Spannungsstabilisierungsvorrichtung einen vorbestimmten Schwellenwert übersteigt. Dieser Schwellenwert kann vorzugsweise so ausgewählt werden, dass der Fall seines Überschreitens sehr zeitnah zum Abschalten des Verbrauchers liegt. Auf diese Weise besteht die Möglichkeit, die Maßnahmen zur Reduzierung der Verlustleistung unmittelbar nach dem Abschalten des Verbrauchers einzuleiten.

In einer Ausführungsform kann zu diesem Zweck der Spannungsstabilisierungsvorrichtung ein Stromdetektor zum Erfassen des Stroms durch die Spannungsstabilisierungsvorrichtung zugeordnet sein.

In diesem Fall ist das Schaltelement vorzugsweise parallel zur Spannungsstabilisierungsvorrichtung und zum Stromdetektor angeordnet und kann sowohl die Spannungsstabilisierungsvorrichtung als auch den Stromdetektor überbrücken.

Weiter kann der Stromdetektor wahlweise in die Steuervorrichtung integriert sein oder ein von der Steuervorrichtung separates Bauteil sein.

In einer anderen Ausführungsform kann die Steuervorrichtung so ausgebildet sein, dass sie das Schaltelement nach einer vorbestimmten Zeitdauer nach dem Abschalten des Verbrauchers zum Reduzieren des Spannungsabfalls über der Spannungsstabilisierungsvorrichtung ansteuert.

Diese Ausführungsvariante benötigt keine zusätzlichen Bauteile wie zum Beispiel einen Stromdetektor. Anderseits kann die Verwendung eines Stromdetektors den Wirkungsgrad der Verlustleistungsreduzierung verbessern, da die Maßnahme zum Reduzieren der Verlustleistung bei abgeschaltetem Verbraucher unabhängig von Bauteiltoleranzen, Netzspannungsschwankungen, Parameterveränderungen mit der Zeit und dergleichen zu einem optimalen Zeitpunkt durchgeführt werden kann.

Des Weiteren ist die Steuervorrichtung derart ausgebildet, dass sie das Schaltelement zum Aufheben der Überbrückung der Spannungsstabilisierungsvorrichtung ansteuern kann, wenn die Betriebsspannung bei abgeschaltetem Verbraucher einen vorbestimmten Schwellenwert unterschreitet.

Nach dem Abschalten des Verbrauchers und dem Einleiten der Reduzierung der Verlustleistung über der Spannungsstabilisierungsvorrichtung entlädt sich zum Beispiel ein Speicherkondensator der Konstantstromquelle mit der Zeit. Nach einer gewissen Zeit, d.h. wenn die Betriebsspannung der Konstantstromquelle auf einen vorbestimmten Schwellenwert gesunken ist, kann daher der Strom der Konstantstromquelle in vorteilhafter Weise wieder zum Laden des Speicherkondensators verwendet werden. Dies wird dadurch erreicht, dass die erfindungsgemäße Maßnahme zum Reduzieren der Verlustleistung der Spannungsstabilisierungsvorrichtung aufgehoben wird. Bis zum vollständigen Aufladen des Speicherkondensators fließt dann ohnehin kein Strom durch die Spannungsstabilisierungsvorrichtung und die Netzteil-Schaltungsanordnung zeigt dementsprechend in dieser Phase trotz abgeschalteten Verbrauchers keine Verlustleistung.

Nachdem der Speicherkondensator wieder voll aufgeladen ist, beginnt wieder ein Stromfluss durch die Spannungsstabilisierungsvorrichtung. Dieser wird von der Steuervorrichtung in der oben beschriebenen Weise (d.h. mittels Stromdetektor oder nach vorgegebenem Zeitablauf) erkannt, sodass nun wieder die Reduzierung des Spannungsabfalls Ober der Spannungsstabilisierungsvorrichtung beginnen kann.

In einer Ausführungsform kann ein Spannungsdetektor zum Erfassen der Betriebsspannung vorgesehen sein.

Dieser Spannungsdetektor kann wahlweise in die Steuervorrichtung integriert sein oder ein von der Steuervorrichtung separates Bauteil sein.

In einer anderen Ausführungsform kann die die Steuervorrichtung so ausgebildet sein, dass sie das Schaltelement nach einer vorbestimmten Zeitdauer nach dem Ansteuern des Schaltelements zum Überbrücken der Spannungsstabilisierungsvorrichtung zum Aufheben der Überbückung der Spannungsstabilisierungsvorrichtung ansteuern kann.

Diese Ausführungsvariante benötigt keine zusätzlichen Bauteile wie zum Beispiel einen Spannungsdetektor. Anderseits kann die Verwendung eines Spannungsdetektors den Wirkungsgrad der Verlustleistungsreduzierung verbessern, da die Maßnahme zum Reduzieren der Verlustleistung bei abgeschaltetem Verbraucher unabhängig von Bauteiltoleranzen, Netzspannungsschwankungen, Parameterveränderungen mit der Zeit und dergleichen zu einem optimalen Zeitpunkt ohne Generierung einer Verlustleistung wieder aufgehoben werden kann.

In einer weiteren Ausgestaltung der Erfindung kann ein Maß des Reduzierens des Spannungsabfalls Ober der Spannungsstabilisierungsvorrichtung variabel sein oder variabel einstellbar sein.

In einer noch weiteren Ausgestaltung der Erfindung ist ein Speicherkondensator zum Glätten der Betriebsspannung vorgesehen. In diesem Fall ist es von Vorteil, zwischen dem Speicherkondensator und der Spannungsstabilisierungsvorrichtung eine Entkopplungsdiode anzuordnen, um ein Entladen des Speicherkondensators über die Spannungsstabilisierungsvorrichtung zu verhindern, wenn der Verbraucher abgeschaltet wird.

Das zum wahlweisen Reduzieren des Spannungsabfalls über der Spannungsstabilisierungsvorrichtung vorgesehene Schaltelement kann wahlweise in die Steuervorrichtung integriert sein oder ein von der Steuervorrichtung separates Bauteil sein.

Weiter weist die Spannungsstabilisierungsvorrichtung zum Beispiel eine Zenerdiode auf.

Die Konstantstromquelle weist beispielsweise ein Kondensatornetzteil auf.

Gemäß einem zweiten Aspekt wird die oben genannte Aufgabe gelöst durch ein Verfahren zum Betreiben einer Netzteil-Schaltungsanordnung mit den Merkmalen des Anspruchs 15. Vorteilhafte Ausgestaltungen und Weiterbildungen der Erfindung sind Gegenstand der abhängigen Ansprüche 16 bis 20.

Bei dem Verfahren zum Betreiben einer Netzteil-Schaltungsanordnung mit einer Konstantstromquelle und einem an einer Betriebsspannung der Konstantstromquelle anliegenden Verbraucher, wobei die Konstantstromquelle eine Spannungsstabilisierungsvorrichtung zum Bestimmen der Betriebsspannung aufweist, wird ein Spannungsabfall über der Spannungsstabilisierungsvorrichtung wahlweise reduziert, wenn der Verbraucher abgeschaltet wird.

Die mit diesem Verfahren erzielbaren Vorteile entsprechen jenen, die bereits oben in Zusammenhang mit der erfindungsgemäßen Netzteil-Schaltungsanordnung erläutert worden sind.

Gemäß der Erfindung wird die Spannungsstabilisierungsvorrichtung wahlweise überbrückt. Auf diese Weise kann der Spannungsabfall Ober der Spannungsstabilisierungsvorrichtung auf Null reduziert werden, wenn der Verbraucher abgeschaltet wird.

Zudem wird der Spannungsabfall über der Spannungsstabilisierungsvorrichtung reduziert, wenn ein Strom durch die Spannungsstabilisierungsvorrichtung einen vorbestimmten Schwellenwert übersteigt.

Hierzu kann zum Beispiel ein Strom durch die Spannungsstabilisierungsvorrichtung mittels eines der Spannungsstabilisierungsvorrichtung zugeordneten Stromdetektors erfasst werden. Alternativ kann zu diesem Zweck der Spannungsabfall über der Spannungsstabilisierungsvorrichtung nach einer vorbestimmten Zeitdauer nach dem Abschalten des Verbrauchers reduziert werden. Ferner wird die Reduzierung des Spannungsabfalls über der Spannungsstabilisierungsvorrichtung wieder aufgehoben, wenn die Betriebsspannung bei abgeschaltetem Verbraucher einen vorbestimmten Schwellenwert unterschreitet.

Hierzu kann zum Beispiel die Betriebsspannung mittels eines Spannungsdetektors erfasst werden. Alternativ ist es zu diesem Zweck möglich, die Überbrückung der Spannungsstabilisierungsvorrichtung nach einer vorbestimmten Zeitdauer der Überbrückung der Spannungsstabilisierungsvorrichtung wieder aufzuheben.

Ferner kann der Spannungsabfall über der Spannungsstabilisrerungsvorrichtung vorzugsweise um ein variables oder variabel einstellbares Maß reduziert werden.

Obige sowie weitere Merkmale und Vorteile der Erfindung werden aus der nachfolgenden Beschreibung bevorzugter, nicht-einschränkender Ausführungsbeispiele unter Bezugnahme auf die beiliegenden Zeichnungen besser verständlich. Darin zeigen:
- Fig. 1: eine Prinzip-Schaltskizze einer Netzteil-Schaltungsanordnung gemäß einem ersten Ausführungsbeispiel der vorliegenden Erfindung;
- Fig. 2: eine Prinzip-Schaltskizze einer Netzteil-Schaltungsanordnung gemäß einem zweiten Ausführungsbeispiel der vorliegenden Erfindung;
- Fig. 3: eine detailliertere Prinzip-Schaltskizze der Netzteil-Schaltungs- anordnung von Fig. 2 gemäß einer ersten Ausführungsvariante;
- Fig. 4: eine detailliertere Prinzip-Schaltskizze der Netzteil-Schaltungs- anordnung von Fig. 2 gemäß einer zweiten Ausführungsvariante; und
- Fig. 5: eine Prinzip-Schaltskizze einer herkömmlichen Netzteil-Schaitungs- anordnung.

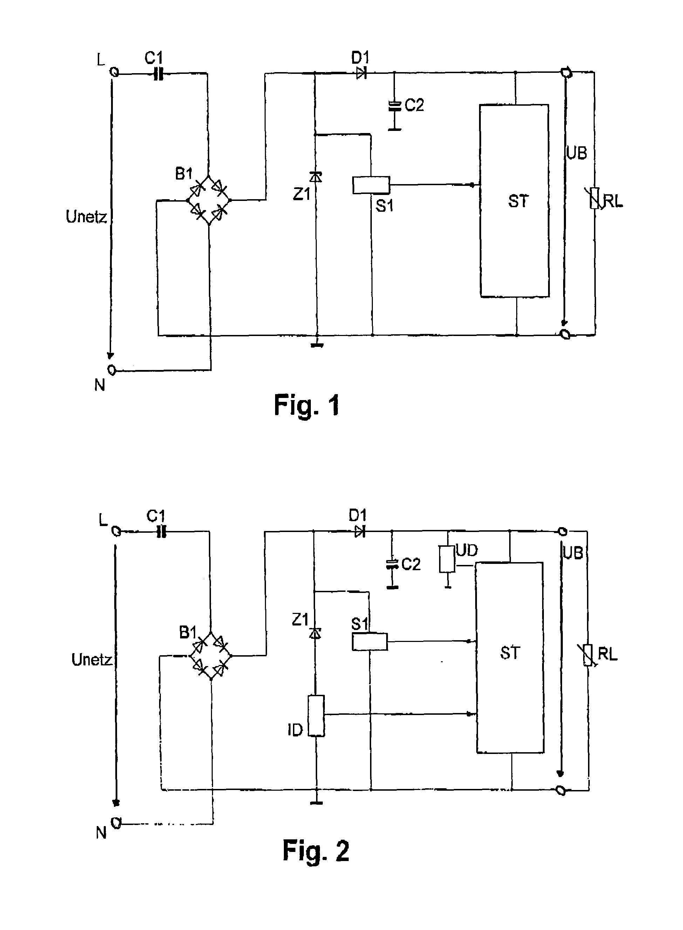

In Fig. 1 ist der Aufbau einer Netzteil-Schaltungsanordnung gemäß einem Ausführungsbeispiel der vorliegenden Erfindung skizziert. Die Netzteil-Schaltungsanordnung wird hier am Beispiel einer Konstantstromquelle in Form eines Kondensatometzteils beschrieben. Die vorliegende Erfindung ist aber grundsätzlich bei beliebigen Konstantstromquellen in vorteilhafter Weise anwendbar.

Das Kondensatornetzteil dieser Schaltungsanordnung weist einen Ladekondensator C1, eine Gleichrichterschaltung in Form eines Brückengleichrichters B1, einen als kapazitiver Vorwiderstand dienenden Speicherkondensator C2 zur Strombegrenzung und eine Spannungsstabilisierungsvorrichtung in Form einer Zenerdiode Z1 auf. Das Kondensatornetzteil ist mit zwei Anschlüssen L und N an eine Netzspannung Unetz angeschlossen, der Ausgang des Brückengleichrichters B1 ist geerdet. Grundsätzlich sind für diese Schaltungsanordnung der Erfindung beliebige Gleichrichterschaltungen, insbesondere sowohl Brückengleichrichter als auch Einweggleichrichter, einsetzbar.

Der Speicherkondensator C2 dient in bekannter Weise der Glättung des zeitlichen Verlaufs der an den Ausgängen der Gleichrichterschaltung B1 anliegenden Betriebsspannung UB. Die Zenerdiode Z1 begrenzt diese Spannung nach oben, um den an das Kondensatornetzteil angeschlossenen Verbraucher RL vor Überspannung zu schützen. Grundsätzlich können bei entsprechender Auslegung an dieses Netzteil auch mehrere Verbraucher RL angeschlossen werden.

Der von diesem Kondensatornetzteil eingeprägte Strom wird im Wesentlichen durch die Frequenz der angelegten Netzspannung Unetz und die Kapazität des Ladekondensators C1 bestimmt, solange die Netzspannung Unetz konstant ist. Die Kapazität dieses Ladekondensators C1 ist dabei so bemessen, dass die Spannung UB am Verbraucher RL bei kleinstem Lastwiderstand ausreichend groß ist.

Die Schaltungsanordnung enthält ferner eine Steuereinrichtung ST, die vorzugsweise ebenfalls von der Betriebsspannung UB der Konstantstromquelle versorgt wird, einen parallel zur Zenerdiode Z1 vorgesehenen Bypass und ein in diesem Bypasszweig angeordnetes Schaltelement S1. Das Schaltelement S1 wird von der Steuereinrichtung ST in der nachfolgend beschriebenen Art und Weise angesteuert, wobei die Grundstellung des Schaltelements S1 einen geöffneten, d.h. nicht-leitenden Bypasszweig bewirkt. Die Steuervorrichtung ST ist zum Beispiel in der Form eines Mikrocontrollers oder einer elektronischen Schaltung realisiert.

Das Schaltelement S1 kann entweder in die Steuervorrichtung ST integriert sein oder ein von der Steuervorrichtung ST separates Bauteil sein.

Vorzugsweise ist zwischen dem Speicherkondensator C2 und der Zenerdiode Z1 eine Entkopplungsdiode D1 gesetzt, die verhindert, dass sich der Speicherkondensator C2 über die Zenerdiode Z1 entladen kann.

Während des normalen Betriebs der Schaltungsanordnung wird der Speicherkondensator C2 mit einer entsprechenden Zeitkonstante Ober die Entkopplungsdiode D1 geladen. Die Betriebsspannung UB für den Verbraucher RL soll bevorzugt auf den Wert der Schwellspannung der Zenerdiode Z1 abzüglich der Vorwärtsspannung der Entkopplungsdiode D1 ansteigen können. Steigt die Spannung UB über der Zenerdiode Z1 über deren Schwellspannung an, beginnt die Spannungsbegrenzung zu arbeiten und hält die Betriebsspannung UB konstant. Der Speicherkondensator C2 ist dabei vollständig aufgeladen, um die Betriebsspannung UB zu sichern.

Falls nun die Funktion des Verbrauchers RL nicht mehr benötigt wird, kann dieser zum Zwecke der Energieeinsparung abgeschaltet werden. Als Folge der Abschaltung des Verbrauchers RL fließt der Strom über die Zenerdiode Z1 ab.

Um die Verlustleistung der Schaltungsanordnung aufgrund dieses Stromflusses über die Zenerdiode Z1 bei einer Abschaltung des Verbrauchers RL zu reduzieren bzw. zu minimieren, steuert die Steuervorrichtung ST das Schaltelement S1 derart an, dass der Spannungsabfall Ober der Zenerdiode Z1 reduziert bzw. minimiert wird. Zu diesem Zweck wird zum Beispiel das Schaltelement S1 geschlossen und damit der Bypasszweig leitend, sodass die Zenerdiode Z1 überbrückt wird.

Der Stromfluss durch die Zenerdiode Z1 und damit die Verlustleistung werden auf diese Weise auf ein akzeptables Maß reduziert, Ein Entladen des Speicherkondensators C2 über die Zenerdiode Z1 bzw. den Bypass wird durch die Entkopplungsdiode D1 verhindert.

Während dieses Zustandes der Reduzierung des Spannungsabfalls über der Zenerdiode Z1 entsteht nur durch den Spannungsabfall am Schaltelement S1 und an den Dioden der Gleichrichterschaltung B1 sowie durch den Verlustfaktor des kapazitiven Vorwiderstandes C1 eine Wirkleistung als Verlustleistung der Netzteil-Schaltungsanordnung, wenn der Verbraucher RL abgeschaltet ist.

Der Ansteuerzeitpunkt des Schaltelements S1 durch die Steuervorrichtung ST kann zum Beispiel rechnerisch anhand der bekannten Last- und Bauteilverhältnisse der Schaltungsanordnung ermittelt werden.

Das Schaltelement S1 bleibt so lange geschlossen, d.h. die Zenerdiode Z1 überbrückt, bis die Betriebsspannung am Verbraucher auf einen minimal zulässigen Wert abgesunken ist. Dann wird das Schaltelement S1 von der Steuervorrichtung ST wieder zum Öffnen, d.h. zum Aufheben des Reduzierens des Spannungsabfalls über der Zenerdiode Z1, angesteuert. Als Folge davon wird der Speicherkondensator C2 wieder vollständig aufgeladen. Während dieser Phase wird keine Verlustleistung generiert.

Auch dieser Ansteuerzeitpunkt des Schaltelements S1 durch die Steuervorrichtung ST kann zum Beispiel rechnerisch anhand der bekannten Last- und Bauteilverhältnisse der Schaltungsanordnung ermittelt werden. Der Zeitpunkt kann zum Beispiel wahlweise ab dem Abschalten des Verbrauchers RL oder ab dem letzten Aktivieren des Schaltelements S1 festgelegt werden.

Sobald der Speicherkondensator C2 vollständig aufgeladen ist, beginnt wieder der Stromfluss durch die Zenerdiode Z1, um die Betriebsspannung UB auf einen konstanten Wert zu begrenzen. Dies löst wieder die Ansteuerung des Schaltelements S1 durch die Steuervorrichtung ST in der oben beschriebenen Weise aus, um den Spannungsabfalls über der Zenerdiode Z1 zu reduzieren bzw. zu minimieren.

Durch die oben beschriebene Ansteuerung des Schaltelements S1 während einer Abschaltung des Verbrauchers RL kann die Zeitdauer, während der in der Netzteil-Schaltungsanordnung eine Verlustleistung durch den Stromfluss über den Bypasszweig und die Zenerdiode Z1 entsteht, verringert werden.

Die Netzteil-Schaltungsanordnung mit Konstantstromquelle muss zu diesem Zweck nur geringfügig modifiziert werden. Es sind nur ein zusätzliches Schaltelement S1 sowie eine entsprechende Ansteuerlogik in der Steuervorrichtung ST erforderlich.

Je nach Anwendungsfall kann es von Vorteil sein, wenn das Maß, um welches der Spannungsabfall über der Zenerdiode Z1 bei einer Abschaltung des Verbrauchers RL reduziert wird, variabel ist oder variabel einstellbar ist. Dies kann zum Beispiel durch einen variablen Widerstand in Reihe mit dem Schaltelement S1 im Bypasszweig der Zenerdiode Z1 realisiert werden.

Anhand von Fig. 2 wird nun ein zweites Ausführungsbeispiel einer Netzteil-Schaltungsanordnung näher erläutert. Dabei sind die gleichen Bauteile wie bei der Schaltungsanordnung von Fig. 1 wieder mit den gleichen Bezugszeichen gekennzeichnet.

Die Netzteil-Schaltungsanordnung von Fig. 2 unterscheidet sich von jener von Fig. 1 dadurch, dass zusätzlich ein Stromdetektor ID zum Erfassen eines Stromflusses durch die Zenerdiode Z1 vorgesehen ist. Der Bypasszweig, in dem das Schaltelement S1 angeordnet ist, überbrückt in diesem Fall sowohl die Zenerdiode Z1 als auch den Stromdetektor ID.

Der Zeitpunkt, zu dem das Schaltelement S1 durch die Steuervorrichtung ST nach dem Abschalten des Verbrauchers RL zum Reduzieren des Spannungsabfalls über der Zenerdiode Z1 angesteuert werden sollte, kann mit Hilfe des Stromdetektors ID sehr genau bestimmt werden. Insbesondere kann die Verwendung eines solchen Stromdetektors das Ansteuern des Schaltelements S1 durch die Steuervorrichtung ST unabhängig von Netzspannungsschwankungen, Bauteiltoleranzen, zeitlichen Parameterveränderungen und dergleichen machen.

Die in Fig. 2 dargestellte Netzteil-Schaltungsanordnung unterscheidet sich von jener des ersten Ausführungsbeispiels außerdem durch einen zusätzlichen Spannungsdetektor UD zum Erfassen der Betriebsspannung UB.

Der Zeitpunkt, zu dem das Schaltelement S1 durch die Steuervorrichtung ST nach dem Abschalten des Verbrauchers RL zum Reduzieren des Spannungsabfalls über der Zenerdiode Z1 wieder zum Aufheben dieser Verlustleistungsreduzierung angesteuert werden sollte, kann mit Hilfe des Spannungsdetektors UD sehr genau bestimmt werden. Insbesondere kann die Verwendung eines solchen Spannungsdetektors DU das Ansteuern des Schaltelements S1 durch die Steuervorrichtung ST unabhängig von Netzspannungsschwankungen, Bauteiltoleranzen, zeitlichen Parameterveränderungen und dergleichen machen.

Der Stromdetektor ID und/oder der Spannungsdetektor DU können wahlweise entweder in die Steuervorrichtung ST integriert sein oder als von der Steuervorrichtung ST separate Komponenten ausgebildet sein.

Als weitere Ausführurtgsbeispiele kann die Netzteil-Schaltungsanordnung auch nur den Stromdetektor ID oder nur den Spannungsdetektor UD aufweisen.

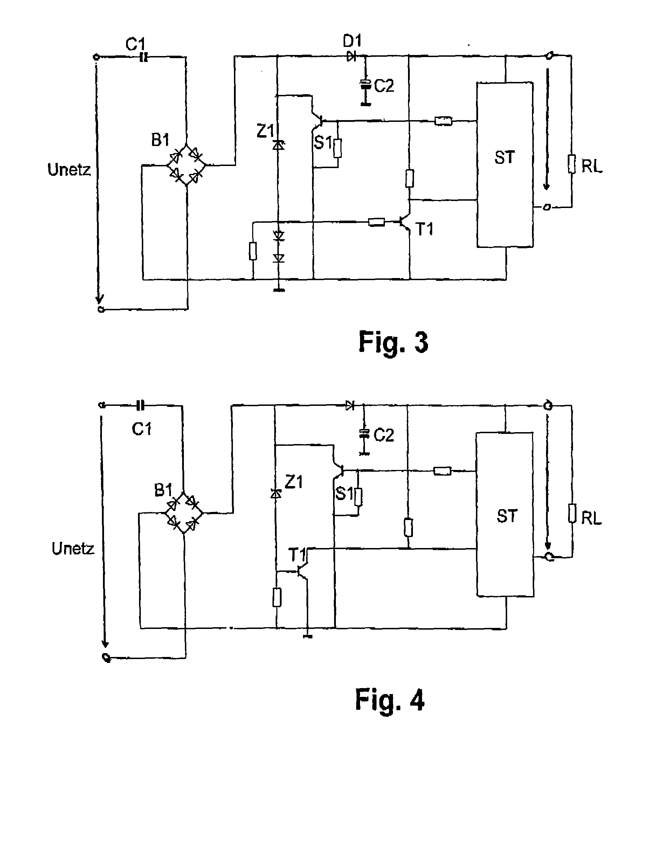

In Fig. 3 und 4 sind zwei verschiedene Ausführungsformen der Netzteil-Schaltungsanordnung von Fig. 2 in mehr Einzelheiten beispielhaft dargestellt.

Das Detektieren des Stromflusses durch die Zenerdiode Z1 kann zum Beispiel durch die Auswertung der Vorwärtsspannung an zwei Dioden erfolgen (vgl. Fig. 3) oder durch ein direktes Verwenden der Basis-Emitter-Diode in einem Transistor T1 (vgl. Fig. 4).

Die Netzteil-Schaltungsanordnungen der Erfindung können grundsätzlich für beliebige Konstantstromquellen eingesetzt werden.

Bei dem an die Betriebsspannung UB der Konstantstromquelle angeschlossenen Verbraucher RL kann es sich grundsätzlich um jede denkbare Art von elektrischen Verbrauchern handeln. Bei dem Verbraucher handelt es sich zum Beispiel um ein Leuchtdioden-Anzeigeelement oder ein Flüssigkristall-Anzeigeelement eines Bedienfeldes eines elektronischen Haushaltsgeräts.

## Patentansprüche

1. Netzteil-Schaltungsanordnung, mit einer Konstantstromquelle (C1, B1, C2, D1, Z1); einer Steuervorrichtung (ST); und einem an einer Betriebsspannung (UB) der Konstantstromquelle anliegenden Verbraucher (RL), wobei die Konstantstromquelle eine Spannungsstabilisierungsvorrichtung (Z1) zum Bestimmen der Betriebsspannung (UB) aufweist,
**dadurch gekennzeichnet,**
**dass** der Spannungsstabilisierungsvorrichtung (Z1) ein Schaltelement (S1) parallel geschaltet ist, um die Spannungsstabilisierungsvorrichtung (Z1) zum Reduzieren des Spannungsabfalls über der spannungsstabilisierungsvorrichtung wahlweise zu überbrücken; und
**dass** die Steuervorrichtung (ST) ausgebildet ist, um das Schaltelement (S1) zum Überbrücken der Spannungsstabilisierungsvorrichtung (Z1) anzusteuern, wenn der Verbraucher (RL) abgeschaltet ist und ein Strom durch die Spannungsstabilisierungsvorrichtung (Z1) einen vorbestimmten Schwellenwert übersteigt, und um das Schaltelement (S1) zum Aufheben der Überbrückung der Spannungsstabilisierungsvorrichtung (Z1) anzusteuern, wenn die Betriebsspannung (UB) bei abgeschaltetem Verbraucher (RL) einen vorbestimmten Schwellenwert unterschreitet.

2. Netzteil-Schaltungsanordnung nach Anspruch 1,
**dadurch gekennzeichnet,**
**dass** der Spannungsstabilisierungsvorrichtung (Z1) ein Stromdetektor (ID) zum Erfassen des Stroms durch die Spannungsstabilisierungsvorrichtung zugeordnet ist.

3. Netzteil-Schaltungsanordnung nach Anspruch 2,
**dadurch gekennzeichnet,**
**dass** das Schaltelement (S1) parallel zur Spannungsstabilisierungsvorrichtung (Z1) und zum Stromdetektor (ID) angeordnet ist und die Spannungsstabilisierungsvorrichtung und den Stromdetektor wahlweise überbrückt.

4. Netzteil-Schaltungsanordnung nach Anspruch 2 oder 3,
**dadurch gekennzeichnet,**
**dass** der Stromdetektor (ID) in die Steuervorrichtung (ST) integriert ist.

5. Netzteil-Schaltungsanordnung nach Anspruch 1,
**dadurch gekennzeichnet,**
**dass** die Steuervorrichtung (ST) ausgebildet ist, um das Schaltelement (S1) nach einer vorbestimmten Zeitdauer nach dem Abschalten des Verbrauchers (RL) zum Überbrücken der Spannungsstabilisierungsvorrichtung (Z1) anzusteuern.

6. Netzteil-Schaltungsanordnung nach einem der Ansprüche 1 bis 5,
**dadurch gekennzeichnet,**
**dass** ein Spannungsdetektor (UD) zum Erfassen der Betriebsspannung (UB) vorgesehen ist.

7. Netzteil-Schaltungsanordnung nach Anspruch 6,
**dadurch gekennzeichnet,**
**dass** der Spannungsdetektor (UD) in die Steuervorrichtung (ST) integriert ist.

8. Netzteil-Schaltungsanordnung nach einem der Ansprüche 1 bis 5,
**dadurch gekennzeichnet,**
**dass** die Steuervorrichtung (ST) ausgebildet ist, um das Schaltelement (S1) nach einer vorbestimmten Zeitdauer nach dem Ansteuern des Schaltelements zum Überbrücken der Spannungsstabilisierungsvorrichtung zum Aufheben der Überbrückung der Spannungsstabilisierungsvorrichtung (Z1) anzusteuern.

9. Netzteil-Schaltungsanordnung nach einem der vorhergehenden Ansprüche, **dadurch gekennzeichnet,**
**dass** ein Maß des Reduzierens des Spannungsabfalls über der Spannungsstabilisierungsvorrichtung (Z1) variabel ist oder variabel einstellbar ist.

10. Netzteil-Schaltungsanordnung nach einem der vorhergehenden Ansprüche, **dadurch gekennzeichnet,**
**dass** ein Speicherkondensator (C2) zum Glätten der Betriebsspannung (UB) vorgesehen ist.

11. Netzteil-Schaltungsanordnung nach Anspruch 10,
**dadurch gekennzeichnet,**
**dass** zwischen dem Speicherkondensator (C2) und der Spannungsstabilisierungsvorrichtung (Z1) eine Entkopplungsdiode (D1) angeordnet ist, um ein Entladen des Speicherkondensators über die Spannungsstabilisierungsvorrichtung zu verhindern.

12. Netzteil-Schaltungsanordnung nach einem der vorhergehenden Ansprüche, **dadurch gekennzeichnet,**
**dass** das Schaltelement (S1) in die Steuervorrichtung (ST) integriert ist.

13. Netzteil-Schaltungsanordnung nach einem der vorhergehenden Ansprüche, **dadurch gekennzeichnet,**
**dass** die Spannungsstabilisierungsvorrichtung (Z1) eine Zenerdiode aufweist.

14. Netzteil-Schaltungsanordnung nach einem der vorhergehenden Ansprüche, **dadurch gekennzeichnet,**
**dass** die Konstantstromquelle ein Kondensatornetzteil aufweist.

15. Verfahren zum Betreiben einer Netzteil-Schaltungsanordnung mit einer Konstantstromquelle (C1, B1, C2, D1, Z1) und einem an einer Betriebsspannung (UB) der Konstantstromquelle anliegenden Verbraucher (RL), wobei die Konstantstromquelle eine Spannungsstabilisierungsvorrichtung (Z1) zum Bestimmen der Betriebsspannung (UB) aufweist,
**dadurch gekennzeichnet,**
**dass** die Spannungsstabilisierungsvorrichtung (Z1) überbrückt wird, wenn der Verbraucher (RL) abgeschaltet wird und ein Strom durch die Spannungsstabilisierungsvorrichtung (Z1) einen vorbestimmten Schwellenwert übersteigt; und
**dass** die Überbrückung der Spannungsstabilisierungsvorrichtung (Z1) wieder aufgehoben wird, wenn die Betriebsspannung (UB) bei abgeschaltetem Verbraucher (RL) einen vorbestimmten Schwellenwert unterschreitet.

16. Verfahren nach Anspruch 15,
**dadurch gekennzeichnet,**
**dass** ein Strom durch die Spannungsstabilisierungsvorrichtung (Z1) mittels eines der Spannungsstabilisierungsvorrichtung zugeordneten Stromdetektors (ID) erfasst wird.

17. Verfahren nach Anspruch 15,
**dadurch gekennzeichnet,**
**dass** die Spannungsstabilisierungsvorrichtung (Z1) nach einer vorbestimmten Zeitdauer nach dem Abschalten des Verbrauchers (RL) überbrückt wird.

18. Verfahren nach einem der Ansprüche 15 bis 17,
**dadurch gekennzeichnet,**
**dass** die Betriebsspannung (UB) mittels eines Spannungsdetektors (UD) erfasst wird.

19. Verfahren nach einem der Ansprüche 15 bis 17,
**dadurch gekennzeichnet,**
**dass** die Überbrückung der Spannungsstabilisierungsvorrichtung (Z1) nach einer vorbestimmten Zeitdauer der Überbrückung der Spannungsstabilisierungsvorrichtung wieder aufgehoben wird.

20. Verfahren nach einem der Ansprüche 15 bis 19,
**dadurch gekennzeichnet,**
**dass** der Spannungsabfall über der Spannungsstabilisierungsvorrichtung (Z1) um ein variables oder variabel einstellbares Maß reduziert wird.
